# EUROPEAN PATENT APPLICATION

(11) **EP 4 831 002 A1**
(43) Date of publication of application: **28.10.2026**
(21) Application number: 26161553.8
(22) Date of filing: 02.03.2026
(51) Int. Cl.: B60Q 5/00

(54) **STEERING WHEEL ASSEMBLY**

(30) Priority: 23.04.2025 CN 202520788568 U
(71) Applicant: Yanfeng International Automotive Technology Co., Ltd., Shanghai 201306 (CN)
(72) Inventor: WANG, Lirong, Shanghai, 201306 (CN); YANG, Guiyi, Shanghai, 201306 (CN)
(74) Representative: Specht, Peter

(57) **Abstract**

The present application provides a steering wheel assembly, falling within the art of steering wheels. The steering wheel assembly comprises a stationary unit, a movable unit and a buffer member, wherein the movable unit is configured to move relative to the stationary unit, and to trigger actuation of a steering wheel horn in the process of movement relative to the stationary unit; and the buffer member is disposed between the stationary unit and the movable unit, and is configured to damp collision between the movable unit and the stationary unit in two directions at an angle. The steering wheel assembly can reduce the abnormal noises of the steering wheel.

## Description

### TECHNICAL FIELD

The present application relates to the technical field of steering wheels, in particular to a steering wheel assembly.

### BACKGROUND ART

With the continuous development of the automotive industry, steering wheels, as a core component for vehicle control, have been constantly evolving in terms of their designs and functions. The steering wheels of modern automotives not only undertake the basic function of steering control, but also integrate a variety of auxiliary functions, such as horns, multimedia control, cruise control, and so on, wherein for the horn serving as a critical device for vehicle safety warning, its triggering mechanism typically relies on the airbag module mounted on the steering wheel.

The function of the horn is achieved in the following way at present: conductive wires are arranged inside the steering wheel; when drivers press the airbag, the mechanical movement of the airbag switches on the conductive wires, thereby triggering the horn to produce sound. As the implementation of function of the horn depends on the mechanical contact between parts inside the steering wheel, relative movement may occur between the parts responsible for achieving function of the horn under certain driving conditions, such as bumpy roads or sharp turns, resulting in collision between the parts and the production of abnormal noise. Such abnormal noise not only impairs the driving experience, but also may cause potential influence to the stability of structures inside the steering wheel.

### CONTENT OF THE INVENTION

An objective of the present application is, for example, to provide a steering wheel assembly capable of reducing abnormal noise of the steering wheel.

The embodiments of the present application can be implemented as follows:
Embodiments of the present application provide a steering wheel assembly, which includes a stationary unit, a movable unit and a buffer member, wherein the movable unit is configured to move relative to the stationary unit, and to trigger actuation of a steering wheel horn in the process of movement relative to the stationary unit; and the buffer member is disposed between the stationary unit and the movable unit, and is configured to damp collision between the movable unit and the stationary unit in two directions at an angle.

Optionally, the stationary unit includes a steering wheel frame and a fastener connected with each other, the movable unit includes a horn actuation plate assembly configured to move relative to the fastener and to trigger actuation of the steering wheel horn, and the buffer member is disposed between the horn actuation plate assembly and the fastener and is configured to damp collision between the horn actuation plate assembly and the fastener in the two directions at the angle, or,
the stationary unit includes a steering wheel frame and a horn actuation plate assembly connected with each other, the movable unit includes a fastener configured to move relative to the horn actuation plate assembly and to trigger actuation of the steering wheel horn, and the buffer member is disposed between the horn actuation plate assembly and the fastener and is configured to damp collision between the horn actuation plate assembly and the fastener in the two directions at the angle.

Optionally, in the case where the movable unit includes the horn actuation plate assembly, a first elastic reset member is disposed between the horn actuation plate assembly and the steering wheel frame.

Optionally, in the case where the movable unit includes the fastener, the movable unit further includes a safety airbag connected with the fastener, and a second elastic reset member is disposed between the safety airbag and the horn actuation plate assembly.

Optionally, the fastener is a fastening pin, and the buffer member is configured to damp collision between the horn actuation plate assembly and the fastening pin in both an axial direction and a radial direction of the fastening pin.

Optionally, the buffer member includes a first buffer segment and a second buffer segment arranged at an angle, wherein the first buffer segment and the second buffer segment are configured to damp collision between the horn actuation plate assembly and the fastening pin in the axial direction and the radial direction of the fastening pin, respectively.

Optionally, an end of the second buffer segment away from the first buffer segment is provided with a flange, which extends in the radial direction of the fastening pin.

Optionally, in the case where the buffer member is fixed to the fastening pin, the flange faces and abuts against the horn actuation plate assembly; or in the case where the buffer member is fixed to the horn actuation plate assembly, the flange faces and abuts against the fastening pin.

Optionally, the fastening pin includes a pin shaft and a flange connected to an end of the pin shaft, and the horn actuation plate assembly is provided with a through hole, through which the pin shaft is inserted;
the first buffer segment is disposed between one of surfaces of the horn actuation plate assembly in the axial direction of the pin shaft and the flange, and the second buffer segment is disposed between an inner wall of the through hole and the pin shaft.

Optionally, the inner wall of the through hole is provided with an inclined surface, and in a direction of the horn actuation plate assembly towards the first buffer segment along the axial direction of the pin shaft, a distance between the inclined surface and the pin shaft gradually increases.

Optionally, an end of the second buffer segment away from the first buffer segment is provided with a flange, which faces the inner wall of the through hole, and the flange is further provided with an inclined guide surface to contact with the inclined surface on the inner wall of the through hole for guiding.

Optionally, the buffer member includes a first buffer segment and a second buffer segment arranged at an angle, wherein the first buffer segment and the second buffer segment are configured to damp collision between the movable unit and the stationary unit in the two directions at the angle, respectively.

Optionally, an end of the second buffer segment away from the first buffer segment is provided with a flange, and the movable unit is configured to move relative to the stationary unit in an extending direction of the second buffer segment, wherein the buffer member is fixed to one of the movable unit and the stationary unit, and the flange faces and abuts against the other of the movable unit and the stationary unit.

Optionally, the horn actuation plate assembly includes a horn actuation plate, a damping element and a bushing, wherein the damping element is disposed between the horn actuation plate and the bushing;
the buffer member is arranged between the bushing and the fastener, and is configured to damp collision between the bushing and the fastener in the two directions at the angle.

Optionally, the buffer member is made of an elastic material.

The beneficial effects of the steering wheel assembly provided in the embodiments of the present application include, for example: in order to reduce the abnormal noise of the steering wheel, a steering wheel assembly is designed, which includes a stationary unit, a movable unit and a buffer member. The movable unit is configured to move relative to the stationary unit, the buffer member is disposed between the stationary unit and the movable unit and serves to damp collision between the movable unit and the stationary unit in two directions at an angle, and the movable unit is used to trigger the actuation of the steering wheel horn during its movement relative to the stationary unit.

Under some adverse road conditions, relative movement occurs between the movable unit for triggering the actuation function of the steering wheel horn and the stationary unit. In such cases, as a buffer member is provided between the stationary unit and the movable unit, which can damp collision between the movable unit and the stationary unit in two directions at an angle, the abnormal noise caused by collision between the stationary unit and the movable unit can be relieved to some extent.

### BRIEF DESCRIPTION OF THE DRAWINGS

In order to more clearly illustrate the technical solutions of the embodiments of the present application, the drawings required in the embodiments will be briefly described below. It should be understood that the following drawings only illustrate some embodiments of the present application and therefore should not be considered as limiting the scope. For those skilled in the art, they can also obtain other related drawings based on these drawings without paying inventive efforts.
FIG. 1 is an exploded view of a first steering wheel assembly in accordance with an embodiment of the present application;
FIG. 2 is a partial exploded view of the first steering wheel assembly in accordance with an embodiment of the present application;
FIG. 3 is a partial cross-sectional view showing that a horn actuation plate assembly of the first steering wheel assembly is in an initial state, in accordance with an embodiment of the present application;
FIG. 4 is a partial cross-sectional view showing that the horn actuation plate assembly of the first steering wheel assembly is in a depressed state, in accordance with an embodiment of the present application;
FIG. 5 is a partial cross-sectional view of a second steering wheel assembly in accordance with an embodiment of the present application;
FIG. 6 is a schematic view of a buffer according to an embodiment of the present application;
FIG. 7 is a partial cross-sectional view of the first steering wheel assembly according to an embodiment of the present application;
FIG. 8 is a partial cross-sectional view showing the assembled relationship between a fastener and the horn actuation plate assembly including a damping element according to an embodiment of the present application.

Reference signs: 10-steering wheel assembly; 100- steering wheel frame; 200-horn actuation plate assembly; 210-through hole; 220-inclined surface; 230-horn actuation plate; 240-damping element; 250-bushing; 300-fastener; 310-pin shaft; 320-flange; 400-buffer member; 410-first buffer segment; 420-second buffer segment; 421-flange; 500-airbag; 600-first elastic reset member; 700-second elastic reset member; 800-positive horn contact; 900-negative horn contact.

### EMBODIMENTS

In order to make the objectives, technical solutions and advantages of the embodiments of the present application more clear, the technical solutions in the embodiments of the present application will be described clearly and completely below in conjunction with the accompanying drawings in the embodiments of the present application. Obviously, the described embodiments are part rather than all of the embodiments of the present application. Generally, the assemblies in the embodiments of the present application described and illustrated in the accompanying drawings herein may be arranged and designed in various different configurations.

Thus, the following detailed description of the embodiments of the present application, as presented in the figures, is not intended to limit the scope of the present application sought to be protected, but is merely representative of selected embodiments of the present application. Based on the embodiments in the present application, all other embodiments obtained by those of ordinary skill in the art without paying creative efforts shall fall within the protection scope of the present application.

It should be noted that like reference signs and letters denote analogous items in the accompanying drawings hereinafter; thus, once an item is defined in one drawing, it is not necessary to further define and explain it in subsequent drawings.

In the description of the present application, it should be noted that the orientation or positional relationships indicated by terms "upper", "lower", "inner", "outer", etc., are based on the orientation or positional relationships shown in the drawings, or the orientation or positional relationships in which the inventive product is customarily placed during use. This is merely for the convenience of describing the present application and simplifying the description, rather than indicating or implying that the referred device or element must have a specific orientation or be constructed and operated in a specific orientation, and thus shall not be construed as a limitation to the present application.

In addition, terms such as "first", "second", etc. (if used) are merely for the purpose of distinguishing components, and shall not be construed as indicating or implying relative importance.

It should be noted that the features in the embodiments of the present application may be combined with each other provided that there is no conflict therebetween.

As disclosed in the background art, under some adverse road conditions (e.g., bumpy roads or sharp turns), relative movement may occur between parts of a vehicle responsible for achieving functions of the horn, which may cause collision between these parts and thus generate abnormal noise. Such abnormal noise not only impairs the driving experience, but also may cause potential influence to the stability of structures inside the steering wheel. The embodiments of the present application provide a steering wheel assembly at least used to solve the aforementioned technical problem.

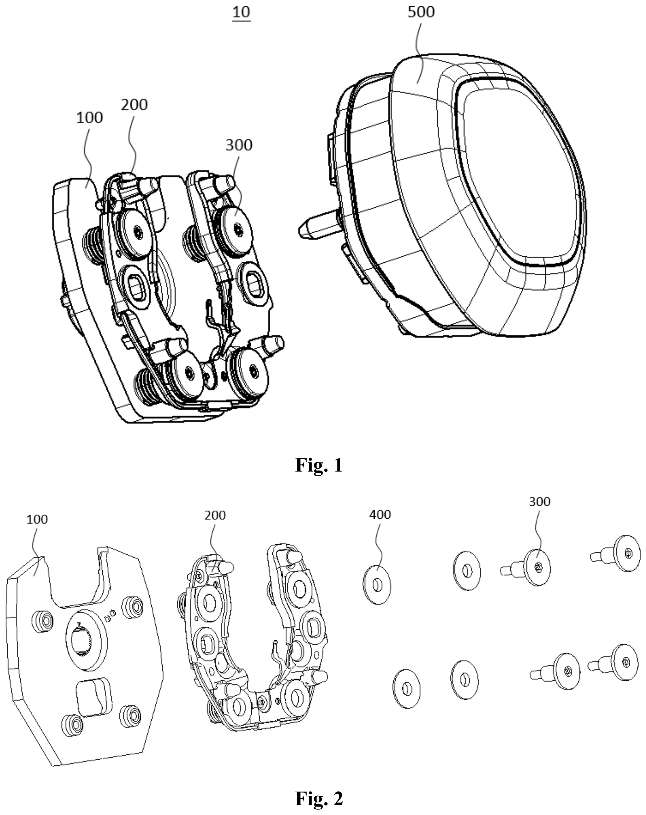

With reference to FIGS. 1 and 2, the steering wheel assembly 10 provided in the embodiments of the present application includes a stationary unit, a movable unit, and a buffer member 400. The movable unit is configured to move relative to the stationary unit and to trigger actuation of the steering wheel horn in the process of movement relative to the stationary unit. The buffer member 400 is disposed between the stationary unit and the movable unit, and is designed to damp collision between the movable unit and the stationary unit in two directions at an angle (the angle being not 0° or 180°).

The stationary unit is a primary structural support part of the steering wheel. For example, the stationary unit includes a steering wheel frame 100, which is used to fix the position of the entire steering wheel assembly 10 and provide a stable mounting base.

The movable unit is capable of moving relative to the stationary unit to achieve the horn actuation function of the steering wheel. When the movable unit is pressed, it may be displaced relative to the stationary unit and trigger actuation of the horn.

The buffer member 400 is disposed between the stationary unit and the movable unit, and plays a key role in buffering and reducing noise. The buffer member 400 can damp collision between the movable unit and the stationary unit simultaneously in two directions at an angle (e.g., a horizontal direction and a vertical direction). This design ensures that the buffer member 400 can effectively reduce abnormal noise when collision between the movable unit and the stationary unit occur in either of the aforementioned directions.

Under some adverse road conditions, relative movement occurs between the movable unit for triggering actuation function of the steering wheel horn and the stationary unit. In such cases, as a buffer member 400 is provided between the stationary unit and the movable unit, which can damp collision between the movable unit and the stationary unit in two directions at an angle, the abnormal noise caused by collision between the stationary unit and the movable unit can be relieved to some extent.

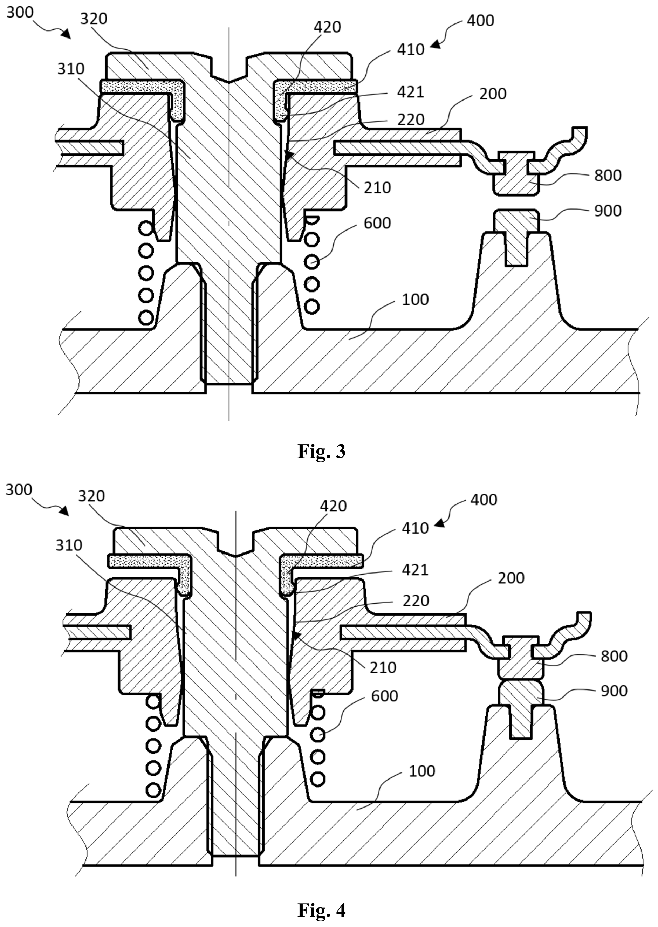

Referring to FIGS. 3 and 4, in some embodiments, the stationary unit includes a steering wheel frame 100 and a fastener 300 connected with each other. The movable unit includes a horn actuation plate assembly 200, which is configured to move relative to the fastener 300 and trigger actuation of the steering wheel horn. The buffer member 400 is disposed between the horn actuation plate assembly 200 and the fastener 300, and is designed to damp collision between the horn actuation plate assembly 200 and the fastener 300 in two directions at an angle.

The fastener 300 is fixedly connected to the steering wheel frame 100. The horn actuation plate assembly 200 and the steering wheel frame 100 are provided with a positive horn contact 800 and a negative horn contact 900 respectively. During movement of the horn actuation plate assembly 200 relative to the fastener 300, the positive horn contact 800 may come into contact with the negative horn contact 900, thereby triggering actuation of the horn.

As the horn actuation plate assembly 200 is movable relative to the fastener 300, the buffer member 400 is provided between the horn actuation plate assembly 200 and the fastener 300, which can damp collision between the horn actuation plate assembly 200 and the fastener 300 in two directions at an angle.

In order to facilitate the resetting of the horn actuation plate assembly 200, a first elastic reset member 600 is disposed between the horn actuation plate assembly 200 and the steering wheel frame 100. The first elastic reset member 600 may be an elastic reset member such as a spring, a shrapnel, an elastomer, or the like. There is no limitation thereto, as long as it can reset the horn actuation plate assembly 200 after the horn actuation plate assembly 200 is pressed.

In addition, the movable unit further includes a safety airbag 500 fixedly connected to the horn actuation plate assembly 200. The means of fixed connection between the safety airbag 500 and the horn actuation plate assembly 200 include, but are not limited to, screwing, snap-fitting, or bonding. For example, a snap-fitting shaft is provided on the safety airbag 500, and a snap-fitting hole is formed in the horn actuation plate assembly 200. The snap-fitting shaft is in snap-fitting engagement with the snap-fitting hole to achieve the fixed connection between the safety airbag 500 and the horn actuation plate assembly 200.

When a driver presses the safety airbag 500, the safety airbag 500 may drive the horn actuation plate assembly 200 to move relative to the fastener 300 until the positive horn contact 800 comes into contact with the negative horn contact 900, thereby triggering actuation of the horn, and in this process, the first elastic reset member 600 is compressed; when the driver releases the safety airbag 500, the safety airbag 500 and the horn actuation plate assembly 200 may move relative to the fastener 300 until reset under the action of the first elastic reset member 600. The buffer member 400 can also function to damp collision between the horn actuation plate assembly 200 and the fastener 300 during the movement of the horn actuation plate assembly 200 relative to the fastener 300.

In some embodiments, the number of the fasteners 300 is the same as that of buffer members 400, and both are provided in multiple quantities. For example, the number of the fasteners 300 and that of the buffer members 400 are both four, with the four fasteners 300 in one-to-one correspondence with the four buffer members 400.

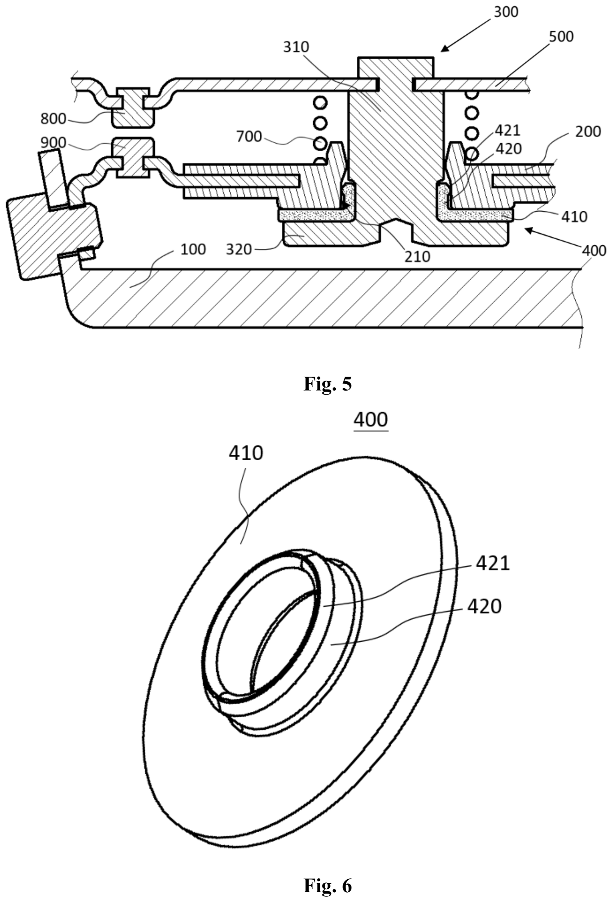

With reference to FIG. 5, in some other embodiments, the stationary unit includes a steering wheel frame 100 and a horn actuation plate assembly 200 connected to each other. The movable unit includes a fastener 300, which is configured to move relative to the horn actuation plate assembly 200 and trigger the actuation of the steering wheel horn. A buffer member 400 is positioned between the horn actuation plate assembly 200 and the fastener 300, and is designed to damp collision between the horn actuation plate assembly 200 and the fastener 300 in two directions at an angle.

The horn actuation plate assembly 200 is fixedly connected to the steering wheel frame 100. As the fastener 300 can move relative to the horn actuation plate assembly 200, the buffer member 400 is provided between the horn actuation plate assembly 200 and the fastener 300, which can damp collision between the horn actuation plate assembly 200 and the fastener 300 in two directions at an angle.

The movable unit further includes a safety airbag 500 connected to the fastener 300. A second elastic reset member 700 is positioned between the safety airbag 500 and the horn actuation plate assembly 200.

The safety airbag 500 is fixedly connected to the fastener 300. The means of fixed connection between the safety airbag 500 and the fastener 300 include, but are not limited to, screwing, snap-fitting, or bonding. For example, the safety airbag 500 is provided with a snap-fit portion, while the fastener 300 is provided with a snap-fit groove. The snap-fit portion and the snap-fit groove engage with each other to achieve a fixed connection between the safety airbag 500 and the fastener 300.

The safety airbag 500 and the horn actuation plate assembly 200 are equipped with a positive horn contact 800 and a negative horn contact 900 respectively. Alternatively, the safety airbag 500 and the steering wheel frame 100 are equipped with a positive horn contact 800 and a negative horn contact 900 respectively. During the movement of the fastener 300 relative to the horn actuation plate assembly 200, the positive horn contact 800 may come into contact with the negative horn contact 900, thereby triggering actuation of the horn.

The second elastic reset member 700 may be an elastic reset member such as a spring, a shrapnel, an elastomer, or the like. There is no limitation thereto, as long as it can reset the safety airbag 500 and the fastener 300 after the safety airbag 500 is pressed.

When the driver presses the safety airbag 500, the safety airbag 500 may drive the fastener 300 to move relative to the horn actuation plate assembly 200 until the positive horn contact 800 comes into contact with the negative horn contact 900, thereby triggering actuation of the horn, and in this process, the second elastic reset member 700 is compressed; when the driver releases the safety airbag 500, the safety airbag 500 and the fastener 300 may move relative to the horn actuation plate assembly 200 until reset under the action of the second elastic reset member 700. The buffer member 400 can also function to damp collision between the horn actuation plate assembly 200 and the fastener 300 during the movement of the fastener 300 relative to the horn actuation plate assembly 200.

In some embodiments, the fastener 300 is a fastening pin, and the buffer member 400 is configured to damp collision between the horn actuation plate assembly 200 and the fastening pin in both the axial and radial directions of the fastening pin. In other alternative embodiments, the fastener 300 may also be a fastening bolt.

Under some adverse road conditions, relative movement occurs between the horn actuation plate assembly 200 and the fastening pin. In such cases, as the buffer member 400 is disposed between the horn actuation plate assembly 200 and the fastening pin, which buffer member 400 can damp collision between the horn actuation plate assembly 200 and the fastening pin in two directions at an angle, the abnormal noise caused by collision between the horn actuation plate assembly 200 and the fastening pin can be reduced to a certain extent, wherein the two directions at an angle refer to the axial direction and the radial direction of the fastening pin respectively.

With reference to FIG. 6, the buffer member 400 includes a first buffer segment 410 and a second buffer segment 420 arranged at an angle, wherein the angle between the first buffer segment 410 and the second buffer segment 420 may be selected to be 90°. In other embodiments, the angle between the first buffer segment 410 and the second buffer segment 420 may also be greater than or less than 90° (but not 0° or 180°).

The first buffer segment 410 and the second buffer segment 420 are configured to damp collision between the movable unit and the stationary unit in two directions at an angle respectively. When the fastener 300 is a fastening pin, the first buffer segment 410 and the second buffer segment 420 are configured to damp collision between the horn actuation plate assembly 200 and the fastening pin in the axial and radial directions of the fastening pin respectively.

The first buffer segment 410 is mainly responsible for absorbing and dispersing the impact force between the horn actuation plate assembly 200 and the fastening pin in the axial direction of the fastening pin, thereby damping collision between the horn actuation plate assembly 200 and the fastening pin in the axial direction of the fastening pin to thereby reduce abnormal noise. The second buffer segment 420 is mainly responsible for absorbing and dispersing the impact force between the horn actuation plate assembly 200 and the fastening pin in the radial direction of the fastening pin, thereby damping collision between the horn actuation plate assembly 200 and the fastening pin in the radial direction of the fastening pin to thereby reduce abnormal noise.

As the first buffer segment 410 and the second buffer segment 420 are arranged at a certain angle, they can jointly form a three-dimensional buffering system, which mainly covers the impact between the horn actuation plate assembly 200 and the fastening pin in both the axial and radial directions of the fastening pin.

The first buffer segment 410 and the second buffer segment 420 are of an integrally formed structure. The first buffer segment 410 is bent relative to the second buffer segment 420, such that the first buffer segment 410 and the second buffer segment 420 are arranged at an angle. Of course, in other embodiments, the first buffer segment 410 and the second buffer segment 420 may also be arranged separately.

In some embodiments, a flange 421 is provided on an end of the second buffer segment 420 away from the first buffer segment 410, and the flange 421 extends in the radial direction of the fastening pin.

In an alternative embodiment, referring to FIGS. 3 to 5, the flange 421 faces and abuts against the horn actuation plate assembly 200, and the buffer member 400 is fixed relative to the fastening pin. For example, the buffer member 400 may be snap-fitted with or bonded to the fastening pin.

Referring to FIGS. 3 and 4, in the process of pressing the safety airbag 500 to move the horn actuation plate assembly 200 relative to the fastening pin, as well as during the resetting of the horn actuation plate assembly 200, the horn actuation plate assembly 200 may move relative to the buffer member 400, specifically, moving in the extension direction of the second buffer segment 420. In the aforementioned processes, when the flange 421 abuts against the horn actuation plate assembly 200, it may cause small obstruction to the horn actuation plate assembly 200, thus less likely to affect the driver's operational feel and the realization of the horn-actuation function.

With reference to FIG. 5, in the process of pressing the safety airbag 500 to move the fastening pin relative to the horn actuation plate assembly 200, as well as during the resetting of the fastening pin, the buffer member 400 may move relative to the horn actuation plate assembly 200, specifically, moving in the extension direction of the second buffer segment 420. In the above process, when the flange 421 abuts against the horn actuation plate assembly 200, it may cause small obstruction to the fastening pin, thus less likely to affect the driver's operational feel and the realization of the horn-actuation function.

On one hand, the provision of the flange 421 can play a good positioning role for the horn actuation plate assembly 200, optimizing the appearance gap and flushness between the safety airbag 500 and the steering wheel; on the other hand, due to the small area of the flange 421, it is less likely to impede the movement of the horn actuation plate assembly 200 or the fastening pin to affect the pressing feel or cause clamping stagnation during the horn-actuation process.

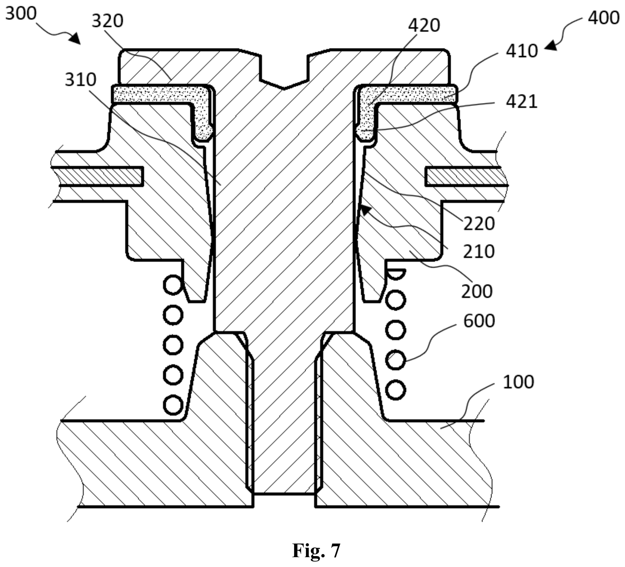

In other alternative embodiments, as shown in FIG. 7, the flange 421 may also face and abut against the fastening pin. In this case, the buffer member 400 may be fixed to either of the fastening pin and the horn actuation plate assembly 200. For example, the buffer member 400 may be fixed to the horn actuation plate assembly 200 by means of, for example, snap-fitting or bonding.

To sum up, in the case where the buffer member 400 is fixed to the fastening pin (see FIGS. 3 to 5), the flange 421 faces and abuts against the horn actuation plate assembly 200. In this case, no matter whether the horn actuation plate assembly 200 moves (FIGS. 3 and 4) or the fastening pin moves (FIG. 5), its movement is not prone to be impeded by the buffer member 400 due to the small-area contact between the flange 421 and the horn actuation plate assembly 200.

In the case where the buffer member 400 is fixed to the horn actuation plate assembly 200 (see FIG. 7), the flange 421 faces and abuts against the fastening pin. Likewise, in this case, no matter whether the horn actuation plate assembly 200 moves (FIG. 7) or the fastening pin moves, its movement is not prone to be impeded by the buffer member 400 due to the small-area contact between the flange 421 and the fastener 300.

Furthermore, a flange 421 is provided on an end of the second buffer segment 420 away from the first buffer segment 410. The movable unit is configured to move relative to the stationary unit in the extension direction of the second buffer segment 420 (in a direction parallel to the axial direction of the fastening pin in this embodiment) to trigger the actuation of the steering wheel horn. The buffer member 400 is fixed to one of the movable unit and the stationary unit, and the flange 421 faces and abuts against the other of the movable unit and the stationary unit. The provision of the flange 421 can achieve the above-mentioned good positioning effect and anti-blocking or anti-sticking effect.

In some embodiments, the fastening pin includes a pin shaft 310 and a flange 320 connected to an end of the pin shaft 310. The horn actuation plate assembly 200 is provided with a through hole 210, through which the pin shaft 310 passes. The first buffer segment 410 is disposed between one of surfaces of the horn actuation plate assembly 200 in the axial direction of the pin shaft 310 and the flange 320, while the second buffer segment 420 is disposed between an inner wall of the through hole 210 and the pin shaft 310.

When relative movement occurs between the horn actuation plate assembly 200 and the fastening pin along the axial direction of the pin shaft 310, the first buffer segment 410 can damp collision between the horn actuation plate assembly 200 and the flange 320, thereby reducing abnormal noise. When relative movement occurs between the horn actuation plate assembly 200 and the fastening pin along the radial direction of the pin shaft 310, the second buffer segment 420 can damp collision between the horn actuation plate assembly 200 and the pin shaft 310, thereby reducing abnormal noise.

The horn actuation plate assembly 200 has a front surface and a rear surface in the axial direction of the pin shaft 310. In the case where the horn actuation plate assembly 200 is fixedly connected to the safety airbag 500 (refer to FIGS. 3 and 4), the front surface of the horn actuation plate assembly 200 faces the safety airbag 500, the first buffer segment 410 is located between the front surface of the horn actuation plate assembly 200 and the flange 320, and the first elastic reset member 600 is positioned between the rear surface of the horn actuation plate assembly 200 and the steering wheel frame 100.

In the case where the horn actuation plate assembly 200 is fixedly connected to the steering wheel frame 100 (refer to FIG. 5), the front surface of the horn actuation plate assembly 200 faces the steering wheel frame 100, the first buffer segment 410 is located between the front surface of the horn actuation plate assembly 200 and the flange 320, and the second elastic reset member 700 is positioned between the rear surface of the horn actuation plate assembly 200 and the safety airbag 500. Specifically, the second elastic reset member 700 may be positioned between the rear surface of the horn actuation plate assembly 200 and a housing of the safety airbag 500.

In some embodiments, an inclined surface 220 is provided on the inner wall of the through hole 210. In a direction of the horn actuation plate assembly 200 towards the first buffer segment 410 along the axial direction of the pin shaft 310, the distance between the inclined surface 220 and the pin shaft 310 gradually increases.

The direction of the horn actuation plate assembly 200 towards the first buffer segment 410 along the axial direction of the pin shaft 310 is the direction in which the front surface of the horn actuation plate assembly 200 faces the first buffer segment 410. In this direction, the distance between the inclined surface 220 and the pin shaft 310 gradually increases. In the process of assembling the horn actuation plate assembly 200 onto the fastening pin, as the opening of the through hole 210 close to the top end of the inclined surface 220 is large, the second buffer segment 420 can be quickly assembled to between the horn actuation plate assembly 200 and the fastening pin.

After the horn actuation plate assembly 200 is assembled with the fastening pin, a gap is present between the inclined surface 220 and the pin shaft 310. When the flange 421 is subjected to a force along the radial direction of the fastening pin to be deformed, the presence of this gap makes collision less likely to occur between the horn actuation plate assembly 200 and the pin shaft 310.

In addition, in the process of triggering the actuation of the steering wheel horn, the distance between a portion of the inclined surface 220 in contact with the flange 421 and the pin shaft 310 gradually increases, resulting in that the pressing force exerted by the inclined surface 220 on the flange 421 decreases gradually, thus less likely to affect the pressing effect.

In the case where a flange 421 is provided on an end of the second buffer segment 420 away from the first buffer segment 410 and the flange 421 faces the inner wall of the through hole 210, the flange 421 may also be provided with an inclined guide surface so as to contact with the inclined surface 220 on the inner wall of the through hole 210 to guide the horn actuation plate assembly 200 (or the fastening pin), thereby achieving rapid assembly of the horn actuation plate assembly 200 (or the fastening pin).

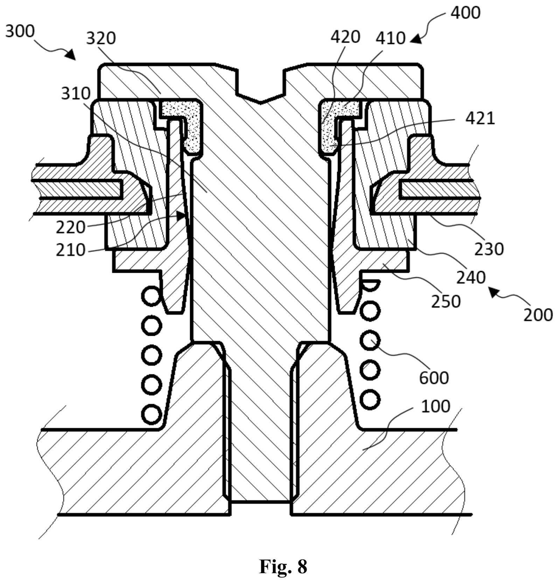

In the aforementioned embodiment, the horn actuation plate assembly 200 mainly consists of a horn actuation plate 230. In some other embodiments, please refer to FIG. 8, in which the horn actuation plate assembly 200 includes a horn actuation plate 230, a damping element 240 and a bushing 250, with the damping element 240 disposed between the horn actuation plate 230 and the bushing 250; the buffer member 400 is disposed between the bushing 250 and the fastener 300, and is configured to damp collision between the bushing 250 and the fastener 300 in two directions at an angle.

In the embodiments of the present application, the buffer member 400 is made of an elastic material. The buffer member 400 made of elastic material can achieve excellent buffering and noise reduction effects.

It should be noted that the elastic material includes, but is not limited to: thermoplastic elastomeric materials such as various types of rubber, TPE, or the like. Typically, the elastic material is EPDM or silicone. The damping element 240 may also be made of any of the aforementioned elastic materials.

In the case where the fastener 300 is a fastening pin, the bushing 250 is provided with a through hole 210, through which the fastening pin passes, and the inner wall of the through hole 210 may also be provided with an inclined surface 220. The buffer member 400 damps collision between the bushing 250 and the fastening pin in both the axial and radial directions of the fastening pin. Specifically, the first buffer segment 410 is positioned between the front surface of the bushing 250 and the flange 320 of the fastening pin, and the second buffer segment 420 is positioned between the inner wall of the through hole 210 and the pin shaft 310 of the fastening pin.

It should be noted that during travel of the vehicle, due to the modal characteristics of the vehicle body, the steering system of the vehicle may experience resonance at specific frequencies. This vibration may be transmitted to the driver-side safety airbag 500 through the steering column interface, causing the safety airbag 500 to move under resonance. However, as the damping element 240, positioned between the horn actuation plate 230 and the bushing 250, is made of elastic material, the kinetic energy generated by the movable unit in its direction of movement may be converted into heat energy by compression of the damping element 240, thus achieving energy absorption effect. As a result, the energy is less likely to be transmitted to the steering wheel frame 100, thereby achieving the purpose of vibration reduction.

The buffer member 400 mainly provides dual protection in the axial and radial directions of the fastening pin. When relative movement occurs between the bushing 250 and the fastening pin along the axial direction of the fastening pin, the first buffer segment 410 can absorb the impact force, preventing direct collision between the bushing 250 and the flange 320 of the fastening pin. When relative movement occurs between the bushing 250 and the fastening pin along the radial direction of the fastening pin, the second buffer segment 420 can absorb the impact force, preventing direct collision between the bushing 250 and the pin shaft 310 of the fastening pin.

The steering wheel assembly 10 provided in the embodiments of the present application can produce at least the following technical effects: as a buffer member 400 is provided between the horn actuation plate assembly 200 and the fastening pin, which can damp collision between the horn actuation plate assembly 200 and the fastening pin in both the axial and radial directions of the fastening pin, the abnormal noise generated by such collision can be reduced to some extent; the first buffer segment 410 of the buffer member 400 is mainly responsible for absorbing and dispersing the impact force between the horn actuation plate assembly 200 and the fastening pin in the axial direction of the fastening pin, accordingly damping collision between the horn actuation plate assembly 200 and the fastening pin in the axial direction of the fastening pin to thereby reduce abnormal noise; the second buffer segment 420 of the buffer member 400 is mainly responsible for absorbing and dispersing the impact force between the horn actuation plate assembly 200 and the fastening pin in the radial direction of the fastening pin, accordingly damping collision between the horn actuation plate assembly 200 and the fastening pin in the radial direction of the fastening pin to thereby reduce abnormal noise; the flange 421 on the second buffer segment 420 has a small area of contact with the unit it abuts against (the horn actuation plate assembly 200 or the fastener 300), resulting in a low friction therebetween, and accordingly causing small resistance against the movement of the movable unit, for example, when the flange 421 on the second buffer segment 420 is abutted against the horn actuation plate assembly 200, it causes small obstruction to the horn actuation plate assembly 200, thus less likely to affect the driver's operational feel and the realization of the horn-actuation function; shaking of the safety airbag 500 is effectively relieved, thereby enhancing its durability.

In summary, the embodiments of the present application provide a steering wheel assembly 10, which mainly includes a steering wheel frame 100, a horn actuation plate assembly 200, and a fastening pin. Under some adverse road conditions, relative movement occurs between the horn actuation plate assembly 200 and the fastening pin. In such cases, as a buffer member 400 is provided between the horn actuation plate assembly 200 and the fastening pin, which can damp collision between the horn actuation plate assembly 200 and the fastening pin in both the axial and radial directions of the fastening pin, the abnormal noises caused by collision between the horn actuation plate assembly 200 and the fastening pin can be reduced to some extent and the driver's driving experience is accordingly improved.

The foregoing are merely detailed embodiments of the present application, but the protection scope of the present application is not limited thereto. Any variation or replacement that can be easily conceived by a person skilled in the art within the technical scope disclosed by the present application shall fall within the protection scope of the present application. Therefore, the protection scope of the present application shall be determined by the protection scope defined by the appended claims.

## Claims

1. A steering wheel assembly, **characterized by** comprising a stationary unit, a movable unit and a buffer member (400), wherein the movable unit is configured to move relative to the stationary unit, and to trigger actuation of a steering wheel horn in the process of movement relative to the stationary unit; and the buffer member (400) is disposed between the stationary unit and the movable unit, and is configured to damp collision between the movable unit and the stationary unit in two directions at an angle.

2. The steering wheel assembly according to claim 1, **characterized in that** the stationary unit comprises a steering wheel frame (100) and a fastener (300) connected with each other, the movable unit comprises a horn actuation plate assembly (200) configured to move relative to the fastener (300) and to trigger actuation of the steering wheel horn, and the buffer member (400) is disposed between the horn actuation plate assembly (200) and the fastener (300) and is configured to damp collision between the horn actuation plate assembly (200) and the fastener (300) in the two directions at the angle, or,
the stationary unit comprises a steering wheel frame (100) and a horn actuation plate assembly (200) connected with each other, the movable unit comprises a fastener (300) configured to move relative to the horn actuation plate assembly (200) and to trigger actuation of the steering wheel horn, and the buffer member (400) is disposed between the horn actuation plate assembly (200) and the fastener (300) and is configured to damp collision between the horn actuation plate assembly (200) and the fastener (300) in the two directions at the angle.

3. The steering wheel assembly according to claim 2, **characterized in that** in the case where the movable unit comprises the horn actuation plate assembly (200), a first elastic reset member (600) is disposed between the horn actuation plate assembly (200) and the steering wheel frame (100).

4. The steering wheel assembly according to claim 2, **characterized in that** in the case where the movable unit comprises the fastener (300), the movable unit further comprises a safety airbag (500) connected with the fastener (300), and a second elastic reset member (700) is disposed between the safety airbag (500) and the horn actuation plate assembly (200).

5. The steering wheel assembly according to any one of claims 2 to 4, **characterized in that** the fastener (300) is a fastening pin, and the buffer member (400) is configured to damp collision between the horn actuation plate assembly (200) and the fastening pin in both an axial direction and a radial direction of the fastening pin.

6. The steering wheel assembly according to claim 5, **characterized in that** the buffer member (400) comprises a first buffer segment (410) and a second buffer segment (420) arranged at an angle, wherein the first buffer segment (410) and the second buffer segment (420) are configured to damp collision between the horn actuation plate assembly (200) and the fastening pin in the axial direction and the radial direction of the fastening pin, respectively.

7. The steering wheel assembly according to claim 6, **characterized in that** an end of the second buffer segment (420) away from the first buffer segment (410) is provided with a flange (421), which extends in the radial direction of the fastening pin.

8. The steering wheel assembly according to claim 7, **characterized in that** in the case where the buffer member (400) is fixed to the fastening pin, the flange (421) faces and abuts against the horn actuation plate assembly (200); or in the case where the buffer member (400) is fixed to the horn actuation plate assembly (200), the flange (421) faces and abuts against the fastening pin.

9. The steering wheel assembly according to any one of claims 6 to 8, **characterized in that** the fastening pin comprises a pin shaft (310) and a flange (320) connected to an end of the pin shaft (310), and the horn actuation plate assembly (200) is provided with a through hole (210), through which the pin shaft (310) is inserted;
the first buffer segment (410) is disposed between one of surfaces of the horn actuation plate assembly (200) in the axial direction of the pin shaft (310) and the flange (320), and the second buffer segment (420) is disposed between an inner wall of the through hole (210) and the pin shaft (310).

10. The steering wheel assembly according to claim 9, **characterized in that** the inner wall of the through hole (210) is provided with an inclined surface (220), and in a direction of the horn actuation plate assembly (200) towards the first buffer segment (410) along the axial direction of the pin shaft (310), a distance between the inclined surface (220) and the pin shaft (310) gradually increases.

11. The steering wheel assembly according to claim 10, **characterized in that** an end of the second buffer segment (420) away from the first buffer segment (410) is provided with a flange (421), which faces the inner wall of the through hole (210), and the flange (421) is further provided with an inclined guide surface to contact with the inclined surface (220) on the inner wall of the through hole (210) for guiding.

12. The steering wheel assembly according to any one of claims 1 to 11, **characterized in that** the buffer member (400) comprises a first buffer segment (410) and a second buffer segment (420) arranged at an angle, wherein the first buffer segment (410) and the second buffer segment (420) are configured to damp collision between the movable unit and the stationary unit in the two directions at the angle, respectively.

13. The steering wheel assembly according to claim 12, **characterized in that** an end of the second buffer segment (420) away from the first buffer segment (410) is provided with a flange (421), and the movable unit is configured to move relative to the stationary unit in an extending direction of the second buffer segment (420), wherein the buffer member (400) is fixed to one of the movable unit and the stationary unit, and the flange (421) faces and abuts against the other of the movable unit and the stationary unit.

14. The steering wheel assembly according to any one of claims 2 to 11, **characterized in that** the horn actuation plate assembly (200) comprises a horn actuation plate (230), a damping element (240) and a bushing (250), wherein the damping element (240) is disposed between the horn actuation plate (230) and the bushing (250);
the buffer member (400) is arranged between the bushing (250) and the fastener (300), and is configured to damp collision between the bushing (250) and the fastener (300) in the two directions at the angle.

15. The steering wheel assembly according to any one of claims 1 to 14, **characterized in that** the buffer member (400) is made of an elastic material.
